# EUROPÄISCHE PATENTANMELDUNG

(11) **EP 3 241 763 A1**
(43) Veröffentlichungstag der Anmeldung: **08.11.2017**
(21) Anmeldenummer: 16168012.9
(22) Anmeldetag: 03.05.2016
(51) Int. Cl.: B65B 31/02, B65B 51/14

(54) **KAMMERBANDMASCHINE MIT HÖHENVERSTELLBARER SIEGELVORRICHTUNG**

(71) Anmelder: MULTIVAC Sepp Haggenmüller SE & Co. KG, 87787 Wolfertschwenden (DE)
(72) Erfinder: HÄRING, Rainer, 87761 Lauben (DE)
(74) Vertreter: Grünecker Patent- und Rechtsanwälte PartG mbB

(57) **Zusammenfassung**

Die Erfindung betrifft eine Kammerbandmaschine (1) mit einer Siegelvorrichtung (2) für einen Siegelvorgang und mit einer Transportvorrichtung (3) für einen Beladeprozess der Siegelvorrichtung (2), wobei die Siegelvorrichtung (2) ein Werkzeugoberteil (9), ein Werkzeugunterteil (10) sowie einen ersten Antrieb (8) umfasst, der dazu ausgebildet ist, das Werkzeugoberteil (9) und das Werkzeugunterteil (10) für den Siegelvorgang zusammenzuführen, wobei das Werkzeugoberteil 9 ein Siegelwerkzeug (11) sowie dafür einen zweiten Antrieb (12) umfasst, der dazu ausgebildet ist, das Siegelwerkzeug (11) zur Durchführung eines Siegelhubs zwischen einer ersten und einer zweiten Position zu verlagern, wenn das Werkzeugoberteil (9) und das Werkzeugunterteil (10) zusammengeführt sind, wobei der Siegelvorgang durchführbar ist, wenn sich das Siegelwerkzeug (11) in der zweiten Position befindet, und wobei das Siegelwerkzeug (11) am Werkzeugoberteil (9) an unterschiedlichen Montagepositionen befestigbar ist, sodass anhand einer Verlagerung des Siegelhubs das Siegelwerkzeug (11) an der zweiten Position jeweils eine vorbestimmte Höhenlage über dem Werkzeugunterteil (10) einnimmt, dadurch gekennzeichnet, dass der zweite Antrieb (12) unabhängig von der Montageposition des Siegelwerkzeugs (11) ortsfest an dem Werkzeugoberteil (9) gelagert ist.

## Beschreibung

Die vorliegende Erfindung betrifft eine Verpackungsmaschine in Form einer Kammerbandmaschine gemäß dem Oberbegriff des Anspruchs 1.

Bei einer bekannten Kammerbandmaschine wird zum Einstellen einer gewünschten Siegelhöhe, d.h. die Höhe an welcher der Siegelprozess stattfindet, die komplette Siegeleinheit, inklusive Membrankasten, Membrane und Druckplatte, in der Höhe verstellt. Aufgrund des hohen Gewichts der kompletten Siegeleinheit sind zur Anpassung der Siegelhöhe aufwendige, insbesondere ergonomisch ungünstige Umstellarbeiten erforderlich.

Der Erfindung liegt daher die Aufgabe zugrunde, eine Kammerbandmaschine mit variierbarer Siegelhöhe zur Verfügung zu stellen, wobei die Anpassung der Siegelhöhe auf einfache Art und Weise, insbesondere ergonomischer durchführbar ist.

Diese Aufgabe wird gelöst mittels einer Kammerbandmaschine gemäß dem Anspruch 1. Verbesserte Weiterbildungen der Erfindung sind Gegenstand der Unteransprüche.

Die Kammerbandmaschine der Erfindung umfasst eine Siegelvorrichtung für einen Siegelvorgang und eine Transportvorrichtung für einen Beladeprozess der Siegelvorrichtung. Die Siegelvorrichtung umfasst ein Werkzeugoberteil, ein Werkzeugunterteil sowie einen ersten Antrieb, der dazu ausgebildet ist, das Werkzeugoberteil und das Werkzeugunterteil für den Siegelvorgang zusammenzuführen. Das Werkzeugoberteil umfasst ein Siegelwerkzeug sowie dafür einen zweiten Antrieb, der dazu ausgebildet ist, das Siegelwerkzeug zur Durchführung eines Siegelhubs zwischen einer ersten und einer zweiten Position zu verlagern, wenn das Werkzeugoberteil und das Werkzeugunterteil zusammengeführt sind, wobei der Siegelvorgang durchführbar ist, wenn sich das Siegelwerkzeug in der zweiten Position befindet, d.h., sich in einer vorbestimmten Siegelhöhe befindet. Ferner ist das Siegelwerkzeug am Werkzeugoberteil an unterschiedlichen Montagepositionen befestigbar, sodass anhand einer Verlagerung des Siegelhubs das Siegelwerkzeug an der zweiten Position jeweils eine vorbestimmte Höhenlage über dem Werkzeugunterteil einnimmt.

Dadurch, dass sich das Siegelwerkzeug am Werkzeugoberteil an unterschiedlichen Montagepositionen befestigen lässt, kann die Siegelhöhe für das Siegelwerkzeug variiert werden. In der Praxis hängt die einzustellende Siegelhöhe u.a. von einer Höhe der zu verpackenden Produkte ab. Meistens wird dabei eine Siegelhöhe eingestellt, die in etwa auf halber Höhe des zu verpackenden Produkts positioniert ist.

Erfindungsgemäß ist der zweite Antrieb unabhängig von der Montageposition des Siegelwerkzeugs ortsfest an dem Werkzeugoberteil gelagert. Der zweite Antrieb wird daher zum Einstellen der Siegelhöhe nicht mehr als integraler Bestandteil des Siegelwerkzeugs abgebaut, sondern ist vom Siegelwerkzeug entkoppelbar am Werkzeugoberteil gelagert.

Das Siegelwerkzeug bildet daher im Vergleich zu herkömmlichen Lösungen eine verkleinerte Baugruppe, die wegen ihres reduzierten Gewichts besser für einen Wechsel der Montageposition an der Siegelvorrichtung in Frage kommt. Die an der Siegelvorrichtung eingestellte Siegelhöhe kann somit mühelos variiert werden, was, insbesondere bei einem Chargenwechsel zu verpackender Produkte, eine Zeitersparnis mit sich bringt.

Vorzugsweise ist das Siegelwerkzeug ohne den zweiten Antrieb vom Werkzeugoberteil abmontierbar. D.h., dass zum Ausbau des Siegelwerkzeugs keinerlei Einstellungen am zweiten Antrieb vorgenommen werden müssen. Dies ermöglicht einen zügigen Wechsel des Siegelwerkzeugs. Bei der Erfindung bleibt der zweite Antrieb unabhängig von der eingestellten Siegelhöhe immer an der gleichen Stelle am Werkzeugoberteil befestigt. Wegen des reduzierten Gewichts ist das Siegelwerkzeug auch besser für Wartungs- und Servicezwecke geeignet. Außerdem ist es vorstellbar, dass der erfindungsgemäß ortsfest an dem Werkzeugoberteil gelagerte zweite Antrieb multifunktional mit unterschiedlichen Siegelwerkzeugen kombinierbar ist, wodurch für den Kunden ein zusätzlicher Nutzen entsteht.

Vorzugsweise umfasst das Werkzeugoberteil eine Druckplatte, die mittels des zweiten Antriebs verstellbar gelagert ist, wobei die Druckplatte am Werkzeugoberteil verbleibend angeordnet ist, selbst dann, wenn das Siegelwerkzeug ausgebaut wird. Wie der zweite Antrieb ist die Druckplatte bei dieser Ausführungsvariante unabhängig von der eingestellten Siegelhöhe immer an der gleichen Stelle am Werkzeugoberteil verstellbar gelagert. Für einen Positionswechsel des Siegelwerkzeugs zur Einstellung einer geänderten Siegelhöhe spielt somit das Gewicht der Druckplatte keine Rolle, weil diese entkoppelt vom Siegelwerkzeug am Werkzeugoberteil befestigt bleibt.

Bevorzugterweise umfasst das Werkzeugoberteil mindestens einen Abstandshalter, der zwischen der Druckplatte und dem Siegelwerkzeug angeordnet ist und beide miteinander lösbar verbindet. Der Abstandshalter dient als Koppelglied zwischen der Druckplatte und dem Siegelwerkzeug, welcher das Siegelwerkzeug lösbar mit der Druckplatte verbindet und eine Bewegung der Druckplatte auf das Siegelwerkzeug überträgt. Mittels des Abstandshalters lässt sich ein Abstand zwischen dem Siegelwerkzeug und der Druckplatte einstellen. Je nachdem wie viele Abstandshalter verwendet werden beziehungsweise wie groß der oder die Abstandshalter sind, kann der Abstand zwischen der Druckplatte und dem Siegelwerkzeug geändert werden, wodurch die Siegelhöhe variierbar ist.

Dadurch, dass der Abstandshalter zwischen der verlagerbaren Druckplatte und dem Siegelwerkzeug gelagert ist und er selbst eine Siegelhubbewegung mitgeht, werden zusätzliche Befestigungsmittel zur Anbringung des Abstandshalters am Werkzeugoberteil nicht benötigt. Auf eine herkömmlich verwendete Spindelmechanik zur Befestigung des Abstandshalters an einem Deckel des Werkzeugoberteils kann verzichtet werden.

Gemäß einer weiteren Ausführungsvariante ist der Abstandshalter dazu ausgebildet, auf einer zum zweiten Antrieb abgewandten Seite der Druckplatte lösbar befestigt zu sein. Der Abstandshalter lässt sich damit problemlos von der Druckplatte abbauen, um gegebenenfalls durch einen anders dimensionierten Abstandshalter ersetzt zu werden. Bei der Erfindung kann der Abstandshalter auch als Wärmeisolator vorliegen, welcher verhindert, dass eine zu große Wärmeleitung vom Siegelwerkzeug auf den darüber angeordneten zweiten Antrieb entsteht.

Der Abstandshalter ist vorzugsweise als Leichtbauprofil ausgebildet. Insbesondere kann er als Hohlkörper ausgebildet sein. Zur Reduzierung seines Gewichts könnte der Abstandshalter auch zumindest abschnittsweise Rippen umfassen. Vorzugsweise ist der Abstandshalter aus einem Kunststoff hergestellt, der eine vorbestimmte Wärmebeständigkeit aufweist.

Vorzugsweise ist das Siegelwerkzeug als Siegelschiene ausgebildet, die auf der eingestellten Siegelhöhe mit einer vorbestimmten Siegelkraft auf eine Gegendruckleiste des Werkzeugunterteils drückt. Das Siegelwerkzeug kann auf einer zur Druckplatte abgewandten Seite des Abstandshalters lösbar befestigt sein. Der Abstandshalter kann somit an der Druckplatte befestigt bleiben, wenn das Siegelwerkzeug von ihm abgebaut wird.

Eine für die meisten Fälle geeignete Siegelhöhe kann dadurch erreicht werden, dass zwei übereinander angeordnete Abstandshalter zwischen der Druckplatte und dem Siegelwerkzeug austauschbar angeordnet sind, wobei diese insbesondere mittels mindestens zwei Bolzen lösbar miteinander verbunden sind. Die Kopplung des an die Druckplatte befestigten Abstandshalters und/oder die Kopplung des an das Siegelwerkzeug befestigten Abstandshalters können ebenfalls mittels lösbarer Bolzen geschehen. Die Bolzenkopplung ermöglicht eine zügige Montage, welche auch werkzeuglos geschehen kann.

Für eine stabile Kopplung des Siegelwerkzeugs am Abstandshalter umfasst der Abstandshalter zweckmäßig mindestens ein Befestigungselement, das in einer formschlüssigen Aufnahme des Siegelwerkzeugs, insbesondere mittels mindestens einem der oben genannten Bolzen lösbar befestigt ist.

Vorzugsweise umfasst das Werkzeugoberteil einen Deckel, wobei der zweite Antrieb derart angeordnet ist, dass er zumindest teilweise mit einem inneren Flächenabschnitt des Deckels zusammenwirkt. Dabei dient der innere Flächenabschnitt des Deckels als Abstützfläche für den zweiten Antrieb. Im Vergleich zum Stand der Technik bietet dies den Vorteil, dass die Verwendung eines gewichtigen Membrankastens nicht mehr für den Betrieb des zweiten Antriebs erforderlich ist, weil sich der zweite Antrieb vorzugsweise direkt an dem inneren Flächenabschnitt des Deckels abstützen kann. Hinzu kommt, dass der zweite Antrieb in einem naheliegenden Bereich des Deckels besser ansteuerbar ist. Die Lagerung des zweiten Antriebs an einer Innenfläche des Deckels trägt somit insgesamt zur Reduzierung des Gewichts des Werkzeugoberteils bei und gestattet ferner eine weniger aufwendige Ansteuerung des zweiten Antriebs. Beispielsweise können dadurch Antriebsleitungen verkürzt werden.

Eine Ausführungsvariante sieht vor, dass der zweite Antrieb eine aufblasbare Membran umfasst, die sich insbesondere an dem inneren Flächenabschnitt des Deckels abstützt. Mittels der aufblasbaren Membran lässt sich das Siegelwerkzeug hervorragend zur Durchführung des Siegelhubs zwischen der ersten und der zweiten Position verlagern.

Bei einer besonders vorteilhaften Ausführung ist die Druckplatte gegen den zweiten Antrieb mittels Federkraft vorgespannt gelagert. Dadurch kann der zweite Antrieb gegen den inneren Flächenabschnitt des Deckels gedrückt werden. Das Werkzeugoberteil kann dafür mehrere Federelemente umfassen, welche die Druckplatte gegen den zweiten Antrieb vorspannen. Die Federelemente sind vorzugsweise an einer Oberseite des Deckels befestigt.

Vorzugsweise sind an gegenüberliegenden Seitenwänden des Deckels mindestens zwei Führungsleisten befestigt, entlang welcher zumindest abschnittsweise das Siegelwerkzeug führbar ist. Bevorzugterweise sind die Führungsleisten derart ausgebildet, dass sie bei Durchführung eines Siegelhubs auch die Druckplatte führen. Dadurch, dass sich mittels der Führungsleisten sowohl das Siegelwerkzeug als auch die darüber angeordnete Druckplatte führen lassen, ist eine Entkopplung zwischen der Druckplatte und dem Siegelwerkzeug möglich. Nichtsdestotrotz ist eine optimale Führung für beide Komponenten gewährleistet, weil die Druckplatte über den Abstandshalter stabil mit dem Siegelwerkzeug verbunden ist.

Ein besonders vielseitiger Einsatz des Siegelwerkzeugs wird dann möglich, wenn das Siegelwerkzeug integral eine Siegelschiene, ein Schneidelement sowie Klemmleisten umfasst.

Gemäß einer Ausführungsform ist die Kammerbandmaschine als Vakuumkammerbandmaschine ausgebildet. Die in der Kammervorrichtung zu verpackenden Produkte können damit evakuiert und/oder einer bestimmten Schutzatmosphäre ausgesetzt werden.

Die Erfindung wird anhand der folgenden Zeichnungen genauer erläutert. Dabei zeigen:
- Fig. 1: eine Kammerbandmaschine gemäß der Erfindung,
- Fig. 2: eine Siegelvorrichtung bekannter Ausführung und
- Fig. 3: eine Siegelvorrichtung der erfindungsgemäßen Kammerbandmaschine.

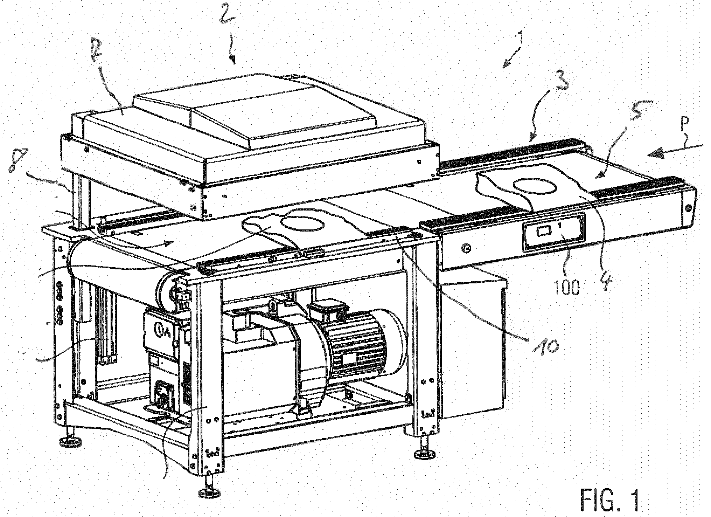

Fig. 1 zeigt eine Kammerbandmaschine 1. Die Kammerbandmaschine 1 umfasst eine Siegelvorrichtung 2 für einen Siegelvorgang und eine Transportvorrichtung 3 für einen Beladeprozess der Siegelvorrichtung 2. In Transportrichtung P betrachtet werden auf einem Förderband 5 der Transportvorrichtung 3 Produkte 4 der Siegelvorrichtung 2 für den Siegelvorgang zugeführt.

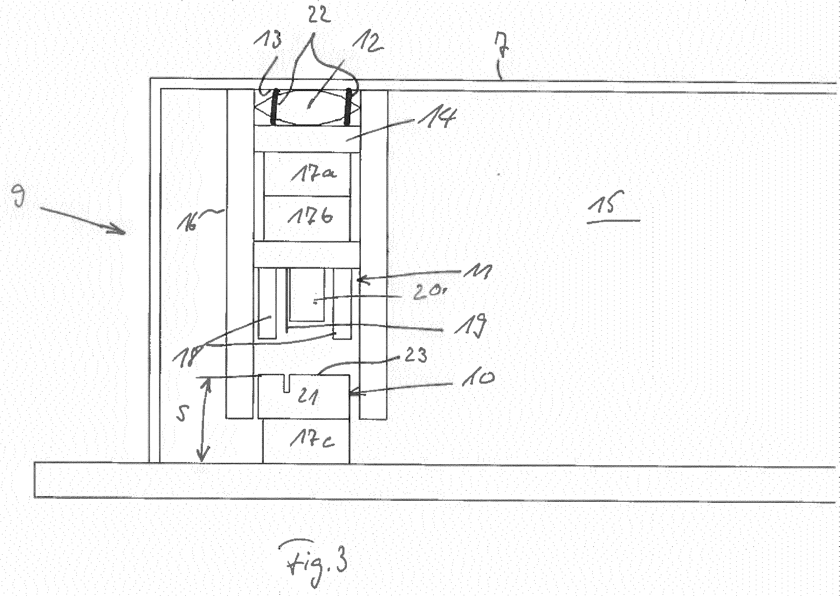

In Fig. 1 besitzt die Siegelvorrichtung 2 einen Deckel 7, der mittels eines ersten Antriebs 8 höhenverstellbar gelagert ist. Im Deckel 7 ist ein, später im Zusammenhang mit Fig. 3 beschriebenes Werkzeugoberteil 9 positioniert, das durch Absenken des Deckels 7 mit einem Werkzeugunterteil 10 der Siegelvorrichtung 2 zusammengeführt werden kann.

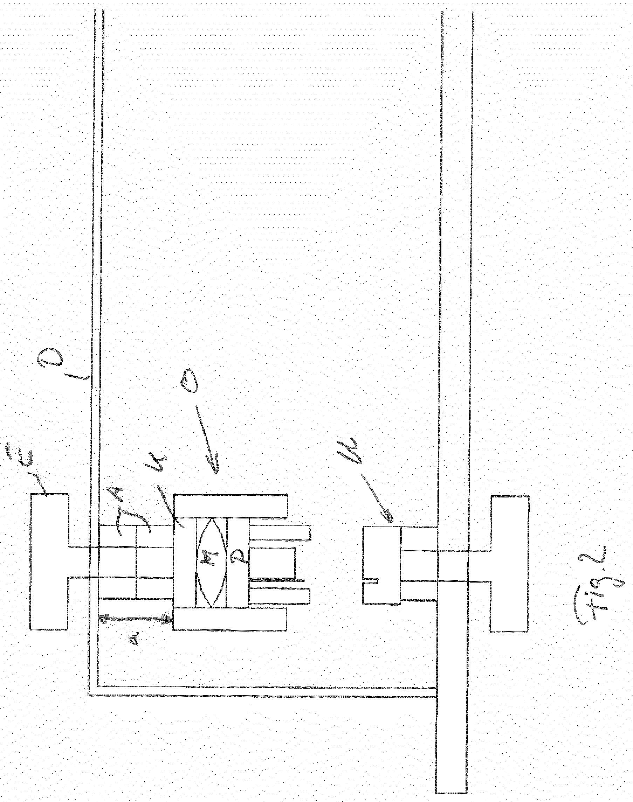

Fig. 2 zeigt in schematischer Darstellung eine bekannte Anordnung. Darin ist ein Siegelwerkzeugoberteil O an einem Deckel D derart befestigt, dass es oberhalb eines Siegelwerkzeugunterteils U positioniert ist. Das Siegelwerkzeugoberteil O enthält eine Membran M, die zum Verlagern einer Druckplatte P ausgebildet ist. Ferner ist in der Fig. 2 eine Einstelleinheit E zu sehen, an welcher zwei Abstandshalter A befestigt sind, um das Siegelwerkzeugoberteil O in einem vorbestimmten Abstand a unterhalb des Deckels D, d. h. auf einer vorbestimmten Montageposition zu halten. Das Siegelwerkzeugoberteil O kann von den Abstandshaltern A abmontiert werden, ist jedoch wegen des integralen Verbaus der Membran M und der Druckplatte P sehr schwer ausgebildet, sodass eine De- bzw. Montage des Siegelwerkzeugoberteils O an unterschiedlichen Montagepositionen schwer durchführbar sind. Hinzu kommt, dass das Gesamtgewicht des Siegelwerkzeugoberteils O durch einen massiv ausgebildeten Membrankasten K, welcher zumindest abschnittsweise den Raum zur Aufnahme des Antriebs M begrenzt, deutlich an Gewicht zunimmt.

Fig. 3 zeigt eine schematische Anordnung gemäß der Erfindung. In Fig. 3 ist das Werkzeugoberteil 9 am Deckel 7 befestigt und oberhalb des Werkzeugunterteils 10 in einer vorbestimmten Montageposition angeordnet. Das Werkzeugoberteil 9 verfügt über ein Siegelwerkzeug 11.

In Fig. 3 ist das Siegelwerkzeug 11 in einer ersten Position gelagert, aus welcher es zum Durchführen eines Siegelhubs in eine zweite Position bewegbar ist. In der zweiten Position drückt eine Siegelschiene 20 des Siegelwerkzeugs 11 auf eine Gegendruckleiste 21 des Werkzeugunterteils 10. Dadurch kommt eine Versiegelung eines dazwischen bereitgehaltenen Verpackungsmaterials zustande.

Zum Durchführen eines Siegelhubs umfasst das Werkzeugoberteil 9 gemäß Fig. 3 einen zweiten Antrieb 12. Der zweite Antrieb 12 ist vorzugsweise als Membran ausgebildet und stützt sich zumindest teilweise an einem inneren Flächenabschnitt 13 des Deckels 7 ab. Unterhalb des zweiten Antriebs 12 ist eine durch ihn verlagerbare Druckplatte 14 positioniert. An einer Innenwand 15 des Deckels 7 sind zwei Führungsleisten 16 befestigt. Die Führungsleisten 16 sind für die Führung der Druckplatte 14 sowie für die Führung des Siegelwerkzeugs 11 ausgebildet. Ferner zeigt Fig. 3, dass die Druckplatte 14 gegen den zweiten Antrieb 12 vorgespannt mittels zwei Federelementen 22 am Deckel 7 befestigt ist. Verstellkräfte des zweiten Antriebs 12 wirken entgegengesetzt zur Federvorspannkraft.

Zwischen der Druckplatte 14 und dem Siegelwerkzeug 11 sind zwei austauschbare Abstandshalter 17a, b angeordnet. Die Abstandshalter 17a, b sind miteinander lösbar gekoppelt, wobei der in Fig. 3 gezeigte obere Abstandshalter 17a lösbar an der Druckplatte 14 und der in Fig. 3 gezeigte untere Abstandshalter 17b lösbar an dem Siegelwerkzeug 11 befestigt sind. Das Siegelwerkzeug 11 kann daher ohne die Druckplatte 14 und den zweiten Antrieb 12 abmontiert werden. Diese können vielmehr ortsfest in der Siegelvorrichtung 6 angeordnet bleiben.

Weiterhin zeigt Fig. 3, dass das Siegelwerkzeug 11 zwei Klemmleisten 18 zum Fixieren eines Verpackungsmaterials auf der Gegendruckleiste 21 besitzt. Schließlich umfasst das Siegelwerkzeug 11 eine Schneideinheit 19, zum Abtrennen eines überflüssigen Verpackungsmaterials.

Fig. 3 zeigt auch einen dritten Abstandshalter 17c, welcher zum Werkzeugunterteil 10 gehört und unter der Gegendruckleiste 21 angeordnet ist. Die Positionierung des Werkzeugoberteils 9 und des Werkzeugunterteils 10 legen eine vorbestimmte Siegelhöhe s fest. Die Siegelhöhe s wird durch die Lage einer Andrückfläche 23 der Gegendruckleiste 21 festgelegt. Zur Einstellung der Siegelhöhe s können unterschiedlich viele Abstandshalter 17a, b, c für das Werkzeugoberteil 9 und/oder das Werkzeugunterteil 10 verwendet werden.

## Patentansprüche

1. Kammerbandmaschine (1) mit einer Siegelvorrichtung (2) für einen Siegelvorgang und mit einer Transportvorrichtung (3) für einen Beladeprozess der Siegelvorrichtung (2), wobei die Siegelvorrichtung (2) ein Werkzeugoberteil (9), ein Werkzeugunterteil (10) sowie einen ersten Antrieb (8) umfasst, der dazu ausgebildet ist, das Werkzeugoberteil (9) und das Werkzeugunterteil (10) für den Siegelvorgang zusammenzuführen, wobei das Werkzeugoberteil (9) ein Siegelwerkzeug (11) sowie dafür einen zweiten Antrieb (12) umfasst, der dazu ausgebildet ist, das Siegelwerkzeug (11) zur Durchführung eines Siegelhubs zwischen einer ersten und einer zweiten Position zu verlagern, wenn das Werkzeugoberteil (9) und das Werkzeugunterteil (10) zusammengeführt sind, wobei der Siegelvorgang durchführbar ist, wenn sich das Siegelwerkzeug (11) in der zweiten Position befindet, und wobei das Siegelwerkzeug (11) am Werkzeugoberteil (9) an unterschiedlichen Montagepositionen befestigbar ist, sodass anhand einer Verlagerung des Siegelhubs das Siegelwerkzeug (11) an der zweiten Position jeweils eine vorbestimmte Höhenlage über dem Werkzeugunterteil (10) einnimmt, **dadurch gekennzeichnet, dass** der zweite Antrieb (12) unabhängig von der Montageposition des Siegelwerkzeugs (11) ortsfest an dem Werkzeugoberteil (9) gelagert ist.

2. Kammerbandmaschine nach Anspruch 1, **dadurch gekennzeichnet, dass** das Werkzeugoberteil (9) eine Druckplatte (14) umfasst, die mittels des zweiten Antriebs (12) verstellbar gelagert ist, wobei die Druckplatte (14) am Werkzeugoberteil (9) verbleibend angeordnet ist, selbst dann, wenn das Siegelwerkzeug (11) ausgebaut wird.

3. Kammerbandmaschine nach Anspruch 2, **dadurch gekennzeichnet, dass** das Werkzeugoberteil (9) mindestens einen Abstandshalter (17a, b) umfasst, der zwischen der Druckplatte (14) und dem Siegelwerkzeug (11) angeordnet ist und beide miteinander lösbar verbindet.

4. Kammerbandmaschine nach Anspruch 3, **dadurch gekennzeichnet, dass** der Abstandshalter (17a, b) dazu ausgebildet ist, auf einer zum zweiten Antrieb (12) abgewandten Seite der Druckplatte (14) lösbar befestigt zu sein.

5. Kammerbandmaschine nach Anspruch 4, **dadurch gekennzeichnet, dass** das Siegelwerkzeug (11) dazu ausgebildet ist, auf einer zur Druckplatte (14) abgewandten Seite des Abstandshalters (17a, b) lösbar befestigt zu sein.

6. Kammerbandmaschine nach einem der Ansprüche 3 bis 5, **dadurch gekennzeichnet, dass** mindestens zwei übereinander angeordnete Abstandshalter (17a, b) zwischen der Druckplatte (14) und dem Siegelwerkzeug (11) austauschbar angeordnet sind, wobei diese insbesondere mittels mindestens zwei Bolzen lösbar miteinander verbunden sind.

7. Kammerbandmaschine nach einem der vorigen Ansprüche 3 bis 6, **dadurch gekennzeichnet, dass** der Abstandshalter (17a, b) mindestens ein Befestigungselement umfasst, das in einer formschlüssigen Aufnahme des Siegelwerkzeugs (11) lösbar befestigt ist.

8. Kammerbandmaschine nach einem der vorigen Ansprüche, **dadurch gekennzeichnet, dass** das Werkzeugoberteil (9) einen Deckel (7) umfasst, wobei der zweite Antrieb (12) derart angeordnet ist, dass er zumindest teilweise mit einem inneren Flächenabschnitt (13) des Deckels (7) zusammenwirkt.

9. Kammerbandmaschine nach einem der vorangehenden Ansprüche, **dadurch gekennzeichnet, dass** der zweite Antrieb (12) eine aufblasbare Membran umfasst, die sich insbesondere an dem inneren Flächenabschnitt (13) des Deckels (7) abstützt.

10. Kammerbandmaschine nach Anspruch 8 oder 9, **dadurch gekennzeichnet, dass** an Seitenwänden (15) des Deckels (7) mindestens zwei Führungsleisten (16) befestigt sind, entlang welcher zumindest abschnittsweise das Siegelwerkzeug (11) führbar ist.

11. Kammerbandmaschine nach einem der vorigen Ansprüche, **dadurch gekennzeichnet, dass** das Siegelwerkzeug (11) ohne den zweiten Antrieb (12) vom Werkzeugoberteil (9) abmontierbar ist.

12. Kammerbandmaschine nach einem der vorigen Ansprüche, **dadurch gekennzeichnet, dass** das Siegelwerkzeug (11) werkzeuglos de- und montierbar ist.

13. Kammerbandmaschine nach einem der vorigen Ansprüche, **dadurch gekennzeichnet, dass** das Siegelwerkzeug (11) integral eine Siegelschiene (20), ein Schneidelement (19) sowie Klemmleisten (18) umfasst.
